# EUROPEAN PATENT APPLICATION

(11) **EP 2 581 642 A1**
(43) Date of publication of application: **17.04.2013**
(21) Application number: 12185959.9
(22) Date of filing: 25.09.2012
(51) Int. Cl.: F21S 4/00, B61D 23/00, B60R 3/02, B60Q 1/32

(54) **Stairway configuration for vehicle**

(30) Priority: 13.10.2011 SE 1150951
(71) Applicant: Scania CV AB (publ), 151 87 Södertälje (SE)
(72) Inventor: Nordström, Mikael, SE-129 40 HÄGERSTEN (SE)

(57) **Abstract**

The invention relates to a stairway configuration (I) for a vehicle (1) provided with a step comprising an edge portion (13) which has adjacent to it a light source (50) which is supplied with energy for visibility of the edge portion, which stairway configuration comprises an edge strip device (40) in the form of a separate unit suited to supporting said light source (50) and to being attached to said edge portion (13). The invention relates also to an edge strip device and a motor vehicle.

## Description

### TECHNICAL FIELD

The invention relates to a stairway configuration for a motor vehicle according to the preamble of claim 1. The invention relates also to an edge strip device. The invention relates also to a motor vehicle.

### BACKGROUND

There are vehicles, e.g. certain buses, which are provided with stairways with a step comprising an edge portion which has adjacent to it an edge strip with integrated striplight.

Such edge strips have to be adaptable to different step widths and have where appropriate to be cut, potentially resulting in protruding sharp edges, particularly where the stairway is not flanked by sidewalls on both sides. Alighting passengers who miss a step may risk lacerating their leg or otherwise suffering injury from sharp edges.

Cutting the edge strip with its integrated striplight may also affect the IP classification of the vehicle provided with the stairway.

### OBJECT OF THE INVENTION

An object of the present invention is to propose a stairway configuration for a motor vehicle which has an edge portion which is rendered visible even after dark and facilitates construction.

### SUMMARY OF THE INVENTION

This and other objects indicated by the description set out below are achieved by a stairway configuration, an edge strip device and a motor vehicle of the kind indicated in the introduction which further exhibit the features indicated in the characterising parts of the attached independent claims 1, 6 and 7. Preferred embodiments of the stairway configuration are defined in the attached dependent claims 2-5.

According to the invention the objects are achieved with a stairway configuration for a vehicle provided with a step comprising an edge portion which has adjacent to it a light source supplied with energy, for visibility of the edge portion, which configuration comprises an edge strip device in the form of a separate unit suited to supporting said light source and to being attached to said edge portion.

A stairway configuration is thus made possible which effectively renders the edge portion visible even after dark, for good safety, while at the same time the separate edge strip device means that the provision of the light source is independent of stairway width, resulting in a flexible solution. Moreover, manufacture is simplified in that there is no need for any adaptation of edge strip devices for support of light sources, making it possible to eliminate the risk of sharp edges from which persons might sustain injuries. A stairway configuration which does not have walls on both sides can therefore with advantage be used. Since the separate edge strip device is independent of stairway width, it need not be cut to size. The IP classification of the stairway configuration provided with light source is thus not affected, i.e. the light source can be kept enclosed, making it possible to eliminate the risk that dust, corrosive substances, moisture and/or water might make their way in and affect electrical connections for said energy supply, with consequent risk of electric shock, fire or the like, and making it easy to meet legal requirements.

According to an embodiment of the stairway configuration said light source is intended to be placed in a groove on, in order to be integrated with, said edge strip device. The construction of the stairway configuration is thus simplified.

According to an embodiment of the stairway configuration said edge strip device has a predetermined length appropriate to the edge portion. Any adaptation to stairway width is thus obviated.

According to an embodiment of the stairway configuration said edge strip device is arranged for fitting on an existing edge strip portion of said edge portion. This makes it possible to use existing structures complementarily, resulting in a cost-effective solution.

According to an embodiment of the stairway configuration said edge strip portion comprises anti-slip elements. This makes it possible to use existing structures complementarily, resulting in a cost-effective solution.

According to an embodiment of the stairway configuration said edge strip device is anodised yellow and/or golden for visibility, resulting in contrast with the adjacent edge portion even if the light source is not illuminated or is out of action, and/or in daylight. Safety is thus enhanced in that there is less risk of anyone missing the step.

According to the invention, the objects are achieved with an edge strip device according to any of the above embodiments. The result is an edge strip device provided with light source and adaptable to different forms of stairway construction.

### DESCRIPTION OF DRAWINGS

The present invention will be better understood by reading the detailed description set out below in conjunction with the attached drawings, in which the same reference notations refer to similar items throughout the many views and
Fig. 1 is a schematic sideview of a motor vehicle,
Fig. 2 is a schematic perspective view of a stairway configuration according to an embodiment of the present invention,
Fig. 3 is a schematic perspective view of an edge strip device according to the present invention,
Fig. 4 is a schematic perspective view of an edge strip device according to the present invention when fitted on an existing edge strip portion, and
Fig. 5 is a schematic cross-sectional view of the edge strip device depicted in Fig. 3 when fitted on an existing edge strip portion.

### DESCRIPTION OF EMBODIMENTS

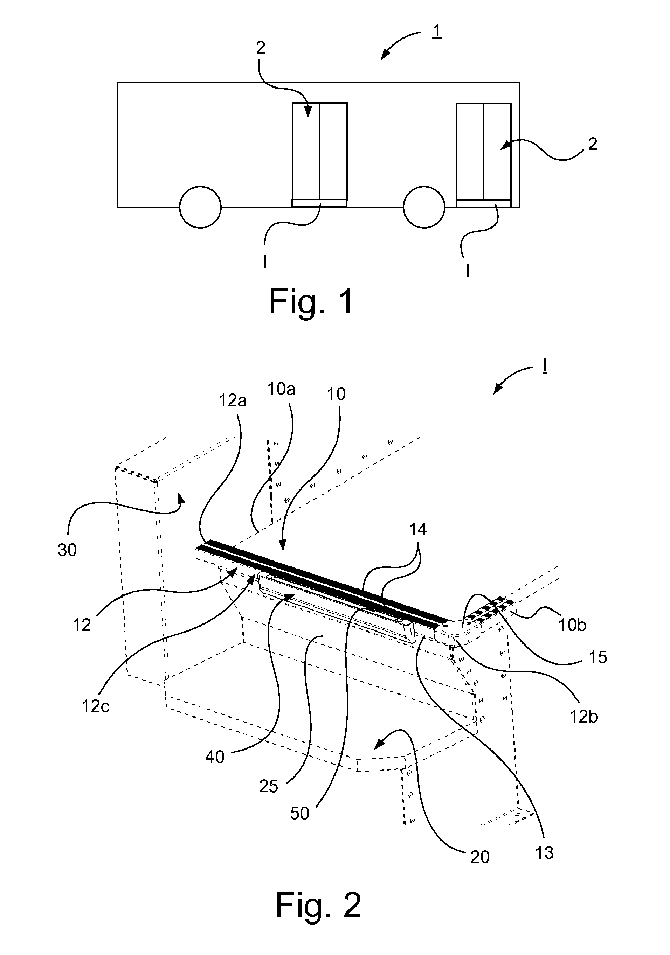

Fig. 1 depicts a side view of a motor vehicle 1. The vehicle exemplified is a heavy vehicle in the form of a bus. It might alternatively be a truck or a car. The vehicle comprises at least one stairway configuration I according to the present invention, situated adjacent in this variant to doors 2 of the vehicle.

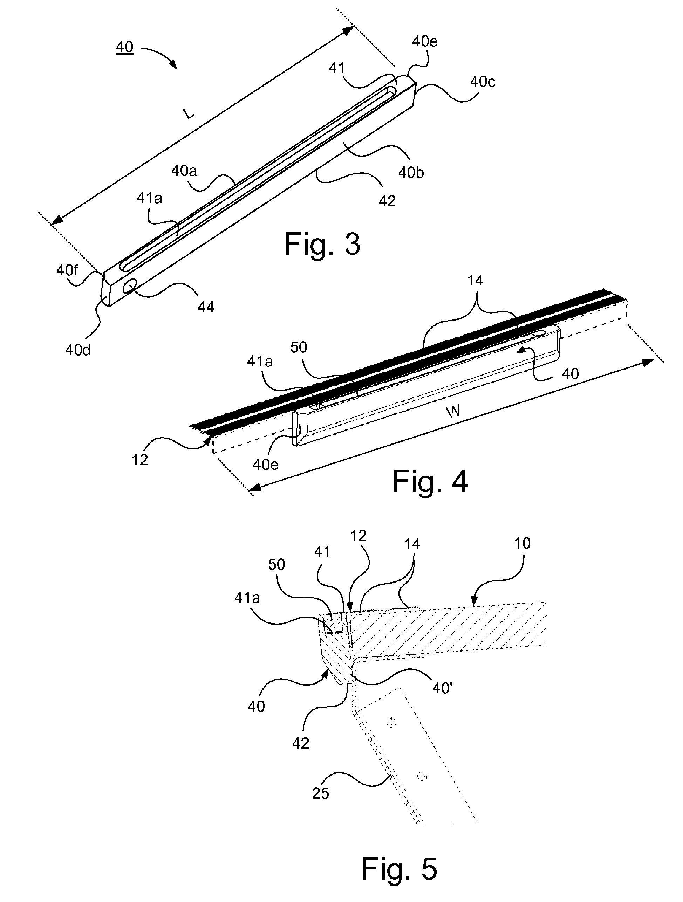

Fig. 2 is a schematic perspective view of a stairway configuration I with a separate edge strip device according to an embodiment of the present invention, Fig. 3 a schematic perspective view of the edge strip device in Fig. 2, and Figs. 4 and 5 the edge strip device fitted on an existing edge strip portion.

The stairway configuration I comprises an upper step 10 which has an edge strip portion 12 arranged to run along its front side, constituting an edge portion 13 which runs along the whole width of the upper step. In this variant, the stairway configuration I comprises also a lower step 20 connected to the upper step 10 via a connecting element 25.

The stairway configuration I abuts on one side 10a against a wall element 30 and is freestanding on the other side 10b.

The edge strip portion 12 has a first short side 12a abutting against the wall element 30 and a second short side 12b which is adjacent to a corner portion of the upper step 10. The edge strip portion is fasteningly concealed in the corner portion by a corner element 15.

The edge strip portion 12 comprises anti-slip elements 14 situated on its upper side and arranged to run along the edge strip portion. In one embodiment the anti-slip elements 14 are placed in grooves/recesses in the edge strip portion.

The edge strip portion 12 is provided with a strongly contrasting colour which renders it visible to and readily distinguishable by persons negotiating the stairway configuration. In one embodiment the edge strip portion is anodised yellow and/or golden for visibility. The anodising also provides corrosion protection.

The stairway configuration I comprises an edge strip device 40 in the form of a separate unit suited to being attached to the edge portion 13 of said upper step 10. In this embodiment the edge strip device is suited to being attached to said edge strip portion 12. The edge strip device may be attached to the edge strip portion in any suitable way.

In one embodiment, the edge strip device 40 is suited to being attached adhesively to the edge strip portion 12, which in one variant is achieved by adhesive bonding. Any unnecessary modifications to the edge strip device are thus obviated. In an alternative variant, the edge strip device is suited to being attached to the edge strip portion 12 by means of a snap connection. This likewise obviates any unnecessary modifications to the edge strip device and also facilitates detachable fitting of the edge strip device.

The edge strip device 40 is suited to being fitted to the edge strip portion 12 so that in conjunction with the step 10 they form a tread appropriate for use when for example boarding and alighting.

A lower portion 40' of the edge strip device 40 is arranged to hang down below the step 10 to make it easy to run cabling through an aperture 44 in the edge strip device, for power supply to the light source 50.

Said edge strip device 40 is arranged to support a light source 50 which is intended to be supplied with energy. In one embodiment said energy supply is arranged to be by supply of electric current.

The edge strip device 40 has a predetermined length L appropriate to the width W of said step 10/edge strip portion 12 so that the edge strip device can be fitted on any suitable vehicle stairway. The length L of the edge strip device is therefore shorter than the width W of said step. This length L is therefore a predetermined length appropriate to the edge portion 13, and in this case to the edge strip portion 12, and is shorter than the width/length W of the edge strip portion.

The edge strip device 40 is of oblong configuration. It has a front side 40a and a rear side 40b. An upper portion along the rear side 40b is arranged to abut against a front side 12c of the edge strip portion 12. The edge strip device has a first short side 40c and an opposite second short side 40d, which have respective rounded corner portions 40e, 40f leading towards the front side 40a. The edge strip device also has an upper side 41 and a lower side 42.

Said edge strip device 40 has running along its upper side a groove 41 a arranged to run between its short sides 40c, 40d. Said light source 50 is intended to be placed in said groove 41 a in order thereby to be integrated with the edge strip device. Said groove is therefore suited to accommodating a light source 50. Said edge strip device has in the lower portion of its rear side 40b an aperture 44 whereby cabling for power supply to said light source 50 is arranged to run from a power supply source of the vehicle for connection to said light source.

Said light source 50 is enclosed in a transparent protective casing. In one embodiment, said light source takes the form of a lightfibre means suited to being enclosed in a housing which is preferably made of plastic material, with a diode situated at one end or each end of the housing, and a power supply is intended to be connected to the diode. In an alternative variant, said light source 50 takes the form of a set of diodes. Said light source may take the form of any suitable light source supplied with energy which renders the edge strip device 40/edge strip portion 12 visible when there is poor visibility, e.g. after dark.

In one variant, said enclosed light source 50 is suited to being fitted in the edge strip device's groove 41 a by adhesion, which in one variant takes the form of adhesive bonding.

The edge strip device 40 is provided with a strongly contrasting colour which renders it visible to and readily distinguishable by persons negotiating the stairway configuration. In one embodiment the edge strip device is anodised yellow and/or golden for visibility. The anodising also provides corrosion protection.

Fitting an edge strip device 40 which is anodised yellow or golden and takes the form of a separate unit integrated to support a light source 50 supplied with energy, on an existing edge strip portion 12 which is provided with anti-slip protection and is anodised yellow or golden, results in a stairway configuration which has stairway strips with integrated light sources 50, strong colour contrast, integrated anti-slip protection in the form of said anti-slip elements 14, and no sharp edges, and is adaptable to different stairway widths.

An edge strip device 40 suited to being fastened on an existing edge strip portion 12 is described above, but the edge strip device according to the present invention might be fitted on any suitable edge portion of a step in a stairway configuration.

An edge strip device 40 suited to being fastened on an existing edge strip portion 12 of an upper step is described above, but the edge strip device according to the present invention might also be fitted on any desired step, e.g. the lower step of the stairway configuration depicted in Fig. 2, which may also comprise existing edge strip portions anodised yellow and/or golden and provided with anti-slip protection.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and its practical applications and hence make it possible for specialists to understand the invention for different embodiments and with the various modifications appropriate to the intended use.

## Claims

1. A stairway configuration (I) for a vehicle (1) provided with a step comprising an edge portion (13) which has adjacent to it a light source (50) supplied with energy for visibility of the edge portion, comprising also an edge strip device (40) in the form of a separate unit suited to supporting said light source (50) and to being attached to said edge portion (13), **characterised in that** said light source (50) is intended to be placed in a groove (41 a) on, in order to be integrated with, said edge strip device (40), said edge strip device having a predetermined length appropriate to the edge portion and further being arranged for fitting on an existing edge strip portion (12) of said edge portion (13).

2. A stairway configuration (I) according to claim 1, in which said edge strip portion (12) comprises anti-slip elements (14).

3. A stairway configuration (I) according to either of claims 1 and 2, in which said edge strip device (40) is anodised yellow and/or golden for visibility.

4. An edge strip device (40) according to any one of the foregoing claims.

5. A motor vehicle provided with a stairway configuration (I) according to any one of claims 1-3.
